# EUROPÄISCHE PATENTSCHRIFT

(11) **EP 2 196 962 B1**
(45) Veröffentlichungstag und Bekanntmachung des Hinweises auf die Patenterteilung: **23.03.2016**
(21) Anmeldenummer: 09178916.4
(22) Anmeldetag: 11.12.2009
(51) Int. Cl.: G07C 7/00, H01M 2/10

(54) **Fahrtschreibereinrichtung mit einer Aufnahme für eine Pufferbatterie**
Tachograph with a holder for a back-up battery
Dispositif de tachygraphe comprenant un support pour une batterie tampon

(30) Priorität: 12.12.2008 DE 102008061717
(43) Veröffentlichungstag der Anmeldung: 16.06.2010
(73) Patentinhaber: Continental Automotive GmbH, 30165 Hannover (DE)
(72) Erfinder: Wahler, Torsten, 78073 Bad Dürrheim (DE)

(56) Entgegenhaltungen:
- EP-A2- 0 703 721
- WO-A1-2004/100080
- US-A- 3 881 961
- US-A- 5 863 674

## Beschreibung

Die Erfindung bezieht sich auf eine Fahrtschreibereinrichtung für ein Kraftfahrzeug mit einer, auf einer Leiterplatte angeordneten Schaltung einer elektronischen Speicher- und Steuereinrichtung, die von einer Spannungsquelle des Kraftfahrzeugs sowie von einer Pufferbatterie spannungsbeaufschlagt ist, mit einem Gehäuse, in dem die Leiterplatte und eine topfartige Batterieaufnahme fest angeordnet sind, wobei die Pufferbatterie durch eine Bestückungsöffnung der Batterieaufnahme in die Batterieaufnahme austauschbar einsetzbar und mittels eines Steckkontakts mit einem Gegensteckkontakt der Leiterplatte elektrisch leitend verbindbar ist.

Bei derartigen Fahrtschreibern, die digitale Tachographen sind, werden die fahrer- und fahrzeugbezogenen Daten in Speicherchips gespeichert und archiviert, die z. B. auf einer Chipkarte oder im Fahrtschreiber selbst integriert sind.

Um die aufgezeichneten Daten zu Speicher- und Kontrollzwecken ersichtlich zu machen, ist es auch möglich, diese Daten auf einem Papierstreifen auszudrucken.

Zur Aufrechterhaltung der Funktionalität des Fahrtschreibers bei nicht vorhandener Spannungsbeaufschlagung durch eine Spannungsquelle des Kraftfahrzeugs entweder bei Defekt dieser Spannungsversorgung oder bei Lagerung und Transport des Fahrtschreibers muss eine Spannungsversorgung des Fahrtschreibers vorhanden sein, da sonst die gespeicherten Daten, insbesondere die Firmware des Fahrtschreibers irreversibel gelöscht werden.

Zur Garantie der permanenten Spannungsversorgung weist der Fahrtschreiber daher eine Pufferbatterie auf, die nur etwa alle zwei Jahre ausgetauscht werden muss.

Eine Unterbrechung der Spannungsversorgung durch die Pufferbatterie kann aber auch eintreten, wenn die,Kontaktierung der Speicher- und Steuereinrichtung des Fahrtschreibers durch die Pufferbatterie defekt ist.

Besteht gleichzeitig kerne Spannungsyersorgung durch die Spannungsquelle des Fahrzeugs, z. B. während des Transports oder der Lagerung des Fahrtschreibers und durch die Pufferbatterie, kommt es zu einem Löschen der gespeicherten Daten.

Bei einer bekannten Fahrtschreibereinrichtung wird nach jedem Einlegen der Pufferbatterie in die Batterieaufnahme eine Steckverbindung über ein Kabel mittels eines Werkzeugs hergestellt. Diese Kontaktierung ist unsicher.

Aus dem Stand der Technik sind verschiedenartige Batteriehalter für Leiterplatten sowie für Fahrtenschreiber bekannt.

Die Schrift EP 0 703 721 offenbart einen Batteriehalter für eine Leiterplatte. Eine Batterie ist durch eine Bestückungsöffnung des Batteriehalters austauschbar einsetzbar. Ein Anschlussstecker ist mittels zweier Kabel flexibel und über Kontaktmittel direkt an der Batterie gehalten. Der Anschlussstecker ist mit einem Gegenstecker der Leiterplatte elektrisch leitend verbindbar.

Aus US 5,863,674 ist einen Batteriehalter für eine Leiterplatte bekannt, bei dem eine elektrische Kontaktierung mit der Leiterplatte mittels Federklemmen erfolgt, die auf Kontaktflächen der Leiterplatte aufgeschoben werden.

Die Schrift WO 2004/100080 gibt eine vormontierte Batterieaufnahmeeinheit für einen Fahrtenschreiber her, die mittels eines Deckels verschließbar ist. Ein Federelement ist an dem Deckel angebracht, das eine in der Batterieaufnahme eingelegte Batterie in axialer Richtung verspannt.

Es ist Aufgabe der Erfindung, eine Fahrtschreibereinrichtung der eingangs genannten Art zu schaffen, die einfach aufgebaut und leicht montierbar ist und bei der eine Kontaktierung der Speicher- und Steuereinrichtung mit der Pufferbatterie mit einem hohen Maß an Sicherheit erfolgt.

Diese Aufgabe wird erfindungsgemäß durch Anspruch 1 gelöst.

Damit kann ohne Werkzeugbenutzung durch einfaches Steckverbinden ein Kontakt hergestellt werden, so dass die Fehlermöglichkeiten sehr gering gehalten werden können und eine korrekte Kontaktierung mit hoher Zuverlässigkeit erfolgt.

Diese Kontaktierung bleibt auch bei einem späteren Wechsel der Pufferbatterie ununterbrochen erhalten.

Wackelkontakte durch nicht korrekt gefügte Stecker werden vermieden.

Zur Vermeidung von Manipulationen kann die Batterieaufnahme in eine Halteöffnung des Gehäuses unlösbar eingesetzt sein.

Dadurch ist keine zerstörungsfreie Demontage der Batterieaufnahme möglich.

Dabei führt es zu einer einfachen Steckmontage, wenn die Batterieaufnahme an ihrem Außenumfang mit Widerhaken ausgebildet ist, die in der Einbaulage der Batterieaufnahme in der Halteöffnung im Innenraum des Gehäuses am umlaufenden Rand der Halteöffnung in Anlage sind.

Eine Möglichkeit zur Kontaktierung besteht darin, dass der Gegensteckkontakt durch Positionierung der Leiterplatte in ihre Einbaulage im Gehäuse auf den Steckkontakt der fest in ihrer Einbaulage im Gehäuse angeordneten Batterieaufnahme aufsteckbar ist, während bei einer anderen ebenfalls vorteilhaften Möglichkeit der Steckkontakt der Batterieaufnahme durch Positionierung der Batterieaufnahme in ihre Einbaulage im Gehäuse auf den Gegensteckkontakt der fest in ihrer Einbaulage im Gehäuse befindlichen Batterieaufnahme aufsteckbar ist.

Eine einfache Möglichkeit ist dadurch gegeben, dass Batterieaufnahme und Steckkontakt eine vormontierte Baueinheit sind, wobei vorzugsweise die vormontierte Baueinheit die in die Batterieaufnahme eingesetzte Pufferbatterie aufweist.

Diese Ausbildung hat neben der einfachen und kostengünstigen Vormontierbarkeit an der Baugruppe den Vorteil, dass die elektrisch leitende Verbindung nicht separat hergestellt werden muss, sondern gleichzeitig mit der Montage der vormontierten Baueinheit oder der Leiterplatte in das Gehäuse erfolgt.

Zur Sicherung der Pufferbatterie in der Batterieaufnahme kann die Bestückungsöffnung der Batterieaufnahme durch einen Verschlussdeckel verschließbar sein, wobei ein leichtes Öffnen zum Austausch der Pufferbatterie ermöglicht wird, wenn der Verschlussdeckel in seinem einen Randbereich mittels eines Gelenks an der Batterieaufnahme angeordnet ist.

Bauteil- und montagesparend ist es, wenn Batterieaufnahme und Verschlussdeckel einteilig als Kunststoffbauteil ausgebildet und mittels eines Filmscharniers gelenkig miteinander verbunden sind.

Zur Sicherung gegen Manipulation und unbefugtes Entfernen der Pufferbatterie kann der sich in Schließstellung befindliche Verschlussdeckel mit der Batterieaufnahme verplombbar sein.

Eine auch bei Erschütterungen feste Lagesicherung der Pufferbatterie in ihrer Soll-Einbaulage wird dadurch erreicht, dass die Pufferbatterie von einer an dem Verschlussdeckel abgestützten Feder gegen den Boden der Batterieaufnahme beaufschlagbar ist.

Bauteilsparend kann dabei die Feder einteilig mit dem Verschlussdeckel ausgebildet sein.

In einfacher Ausbildung ist der Steckkontakt ein Kontaktstift oder eine Kontaktbuchse und der Gegensteckkontakt eine Kontaktbuchse oder ein Kontaktstift.

Zur einfachen Steckmontage des Steckkontakts oder der Kontaktbuchse kann der Steckkontakt oder die Kontaktbuchse in eine Kontaktöffnung der Batterieaufnahme eingesetzt sein, wobei der Steckkontakt oder die Kontaktbuchse form- und/oder kraftschlüssig in der Kontaktöffnung eingesetzt sein können und somit in der Kontaktöffnung gehalten werden.

Eine Abstützung der auf den Steckkontakt einwirkenden Aufsteckkräfte bei der Montage ergibt sich dadurch, dass der Steckkontakt mit seinem der Leiterplatte abgewandten Ende an einer Abstützung in Anlage ist.

Dabei kann in einfacher Weise die Abstützung an dem Verschlussdeckel angeordnet und in der Schließposition des Verschlussdeckels an dem Steckkontakt in Anlage sein.

Zur selbsttätigen lagerichtigen Zuordnung von Steckkontakt und Gegenstückkontakt kann die Batterieaufnahme ein oder mehrere Positionieransätze aufweisen, die in entsprechende Positionierausnehmungen in der Leiterplatte ragen, wobei die Positionieransätze vorzugsweise weiter hervorragend sind als der Steckkontakt.

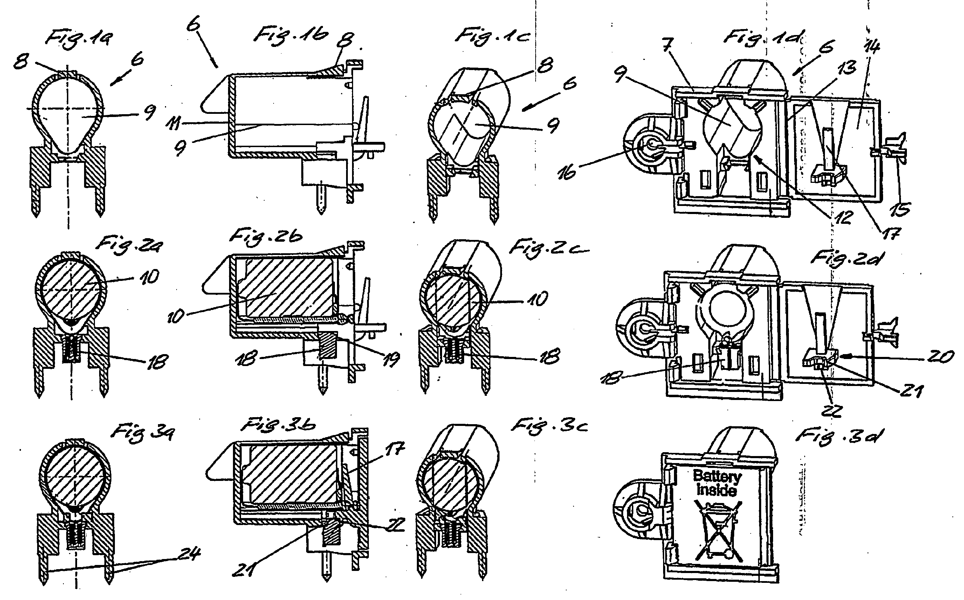

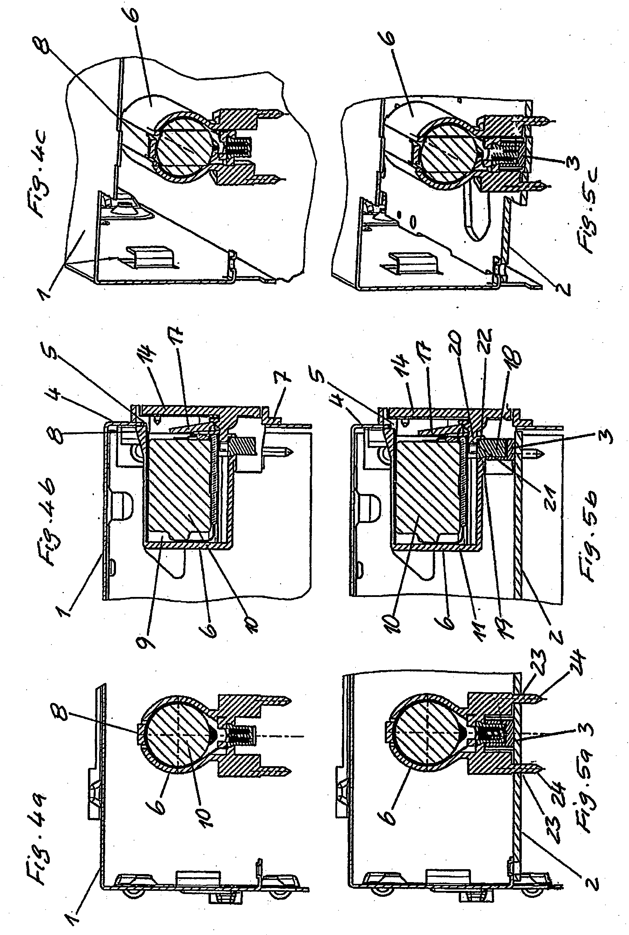

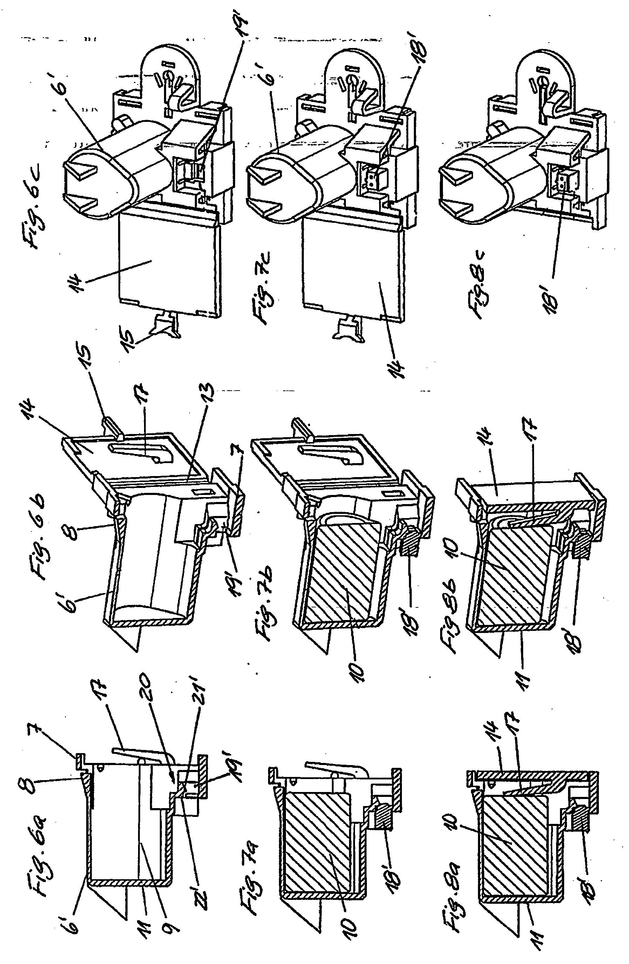

Ausführungsbeispiele der Erfindung sind in der Zeichnung dargestellt und werden im Folgenden näher beschrieben. Es zeigen:
Figuren 1a - 1d:
   Darstellungen in verschiedenen Ansichten eines ersten Ausführungsbeispiels einer Batterieaufnahme einer Fahrtschreibereinrichtung,
Figuren 2a - 2d:
   Darstellungen in verschiedenen Ansichten der Batterieaufnahme nach Figur 1a bis 1d mit eingesetzter Pufferbatterie und geöffneter Verschlussklappe,
Figuren 3a - 3d:
   Darstellungen in verschiedenen Ansichten der Batterieaufnahme nach Figur 1a bis 1d mit eingesetzter Pufferbatterie und geschlossener Verschlussklappe,
Figuren 4a - 4c:
   Darstellungen der in ein Gehäuse eingesetzten Batterieaufnahme nach den Figuren 3a bis 3d,
Figuren 5a - 5c:
   Darstellungen der in ein Gehäuse eingesetzten Batterieaufnahme nach Figuren 4a bis 4c mit in das Gehäuse eingesetzter Leiterplatte,
Figuren 6a - 6c:
   Darstellungen in verschiedenen Ansichten eines nicht-beauspruchten zweiten Ausführungsbeispiels einer Batterieaufnahme einer Fahrtschreibereinrichtung,
Figuren 7a - 7c:
   Darstellungen in verschiedenen Ansichten der Batterieaufnahme nach Figur 6a - 6c mit eingesetzter Pufferbatterie und geöffneter Verschlussklappe,
Figuren 8a - 8c:
   Darstellungen in verschiedenen Ansichten der Batterieaufnahme nach Figur 6a - 6c mit eingesetzter Pufferbatterie und geschlossener Verschlussklappe,
Figuren 9a - 9c:
   Darstellungen in verschiedenen Ansichten eines Gehäuses mit eingesetzter Leiterplatte,
Figuren 10a - 10c:
   Darstellungen in verschiedenen Ansichten der in das Gehäuse nach Figur 9a - 9c eingesetzten Batterieaufnahme nach Figur 8a - 8c.

In den Figuren 1a bis 5c und 6a bis 10c sind die Montageschritte dargestellt.

Die Figuren 5a bis 5c und die Figuren 10a bis 10c zeigen fertig zusammengebaute Ausführungsbeispiele.

Ein aus Blech bestehendes Gehäuse 1 ist an seiner Unterseite offen, wobei in diese Öffnung eine Leiterplatte 2 eingesetzt und in ihrer Einbauposition an dem Gehäuse befestigt ist.

Auf der Leiterplatte ist eine nicht dargestellte Schaltung einer elektronischen Speicher- und Steuereinrichtung angeordnet, die über einen ebenfalls auf der Leiterplatte angeordneten Gegensteckkontakt 3, 3' kontaktierbar ist.

In einer zur Ebene der Leiterplatte 2 senkrechten Seitenwand 4 des Gehäuses 1 ist eine Halteöffnung 5 ausgebildet, in die von außen eine topfartige Batterieaufnahme 6, 6' bis zum Anschlag eines die Topföffnung der Batterieaufnahme 6, 6' umschließenden, rechteckigen Rahmens 7 der Batterieaufnahme 6, 6' an der Außenseite der Seitenwand 4 einführbar ist.

Die Batterieaufnahme 6, 6' besitzt an ihrer oberen Außenseite einen federnd auslenkbaren, hervorstehenden Widerhaken 8, der beim Einführen der Batterieaufnahme 6, 6' in die Halteöffnung 5 derart federnd ausgelenkt wird, dass er nicht nach außen hervorsteht.

Sobald die Batterieaufnahme 6, 6' bis zur Anlage des Rahmens 7 in das Gehäuse 1 eingeführt ist, rastet der Widerhaken 8 federnd nach außen und hintergreift die Seitenwand 4 in dem die Halteöffnung 5 umgebenden Bereich.

In die Aufnahmekammer 9 der Batterieaufnahme 6, 6' ist durch die Bestückungsöffnung 12 der Aufnahmekammer 9 eine Pufferbatterie 10 bis zur Anlage am Boden 11 der Aufnahmekammer 9 einsetzbar.

An der einen senkrechten Seite des Rahmens 7 ist über ein Filmscharnier 13 ein Verschlussdeckel 14 an der Batterieaufnahme 6, 6' angelenkt, durch den die Bestückungsöffnung 12 verschließbar ist.

An dem dem Filmscharnier 13 gegenüberliegenden Rand des Verschlussdeckels steht ein Verschlussansatz 15 hervor, der bei geschlossenem Verschlussdeckel 14 in eine entsprechend geformte Ausnehmung 16 einführbar ist.

Diese Ausnehmung 16 ist in einem von dem Rahmen 7 wegragenden Ohr der Batterieaufnahme 6, 6' ausgebildet und kann bei eingeführtem Verschlussansatz 15 von einer nicht dargestellten Plombe überdeckt und gesichert werden.

An der Innenseite des Verschlussdeckels 14 ist einteilig ein Federarm 17 angeformt, der bei geschlossenem Verschlussdeckel 14 mit Vorspannung die Pufferbatterie 10 beaufschlagt und gegen den Boden 10 drückt.

An der Batterieaufnahme 6, 6' ist ein leitend mit der Pufferbatterie 10 verbundener Steckkontakt 18, 18' angeordnet, der im Zusammenbauzustand mit dem Gegensteckkontakt 3, 3' steckverbunden ist.

Bei dem Ausführungsbeispiel der Figuren 1a bis 5c ist der Steckkontakt 18 ein rechtwinklig zur Leiterplatte 2 sich erstreckender Kontaktstift, der in eine entsprechende Kontaktöffnung 19 der Batterieaufnahme 6 eingesetzt ist.

An dem Verschlussdeckel 14 ist eine Haltenase 20 angeformt, die in der Schließstellung des Verschlussdeckels 14 mit einem ersten Bereich 21 an der der Leiterplatte 2 abgewandten Stirnseite des Steckkontakts 18 in Anlage ist.

Ein zweiter Bereich 22 der Haltenase 20 liegt radial mit Vorspannung an dem Steckkontakt 18 an und hält diesen somit kraftschlüssig in der Kontaktöffnung 19.

Der Gegenkontakt 3 ist eine fest auf der Leiterplatte 2 angeordnete Kontaktbuchse.

In der Leiterplatte 2 sind zwei zum Gegenkontakt 3 diametral einander gegenüberliegende Positionierausnehmungen 23 ausgebildet.

Entsprechend den Positionierausnehmungen 23 weist die Batterieaufnahme 6 zwei zur Leiterplatte 9 gerichtete Positionieransätze 24 auf.

Zur Montage wird die aus verschlossener Batterieaufnahme 6 mit eingesetzter Pufferbatterie 10 und Steckkontakt 18 bestehende vormontierte Baueinheit in die Halteöffnung 5 des Gehäuses 1 eingesetzt.

Danach erfolgt ein Einsetzen der Leiterplatte 2 in das Gehäuse 1, wobei zunächst die Positionierausnehmungen 23 die weiter hervorstehenden Positionieransätze 24 übergreifen und dann die Kontaktbuchse des Gegensteckkontakts 3 auf den Kontaktstift des Steckkontakts 18 aufgeschoben wird, bis die Leiterplatte 2 ihre Einbauposition erreicht hat und in dem Gehäuse 1 befestigt wird.

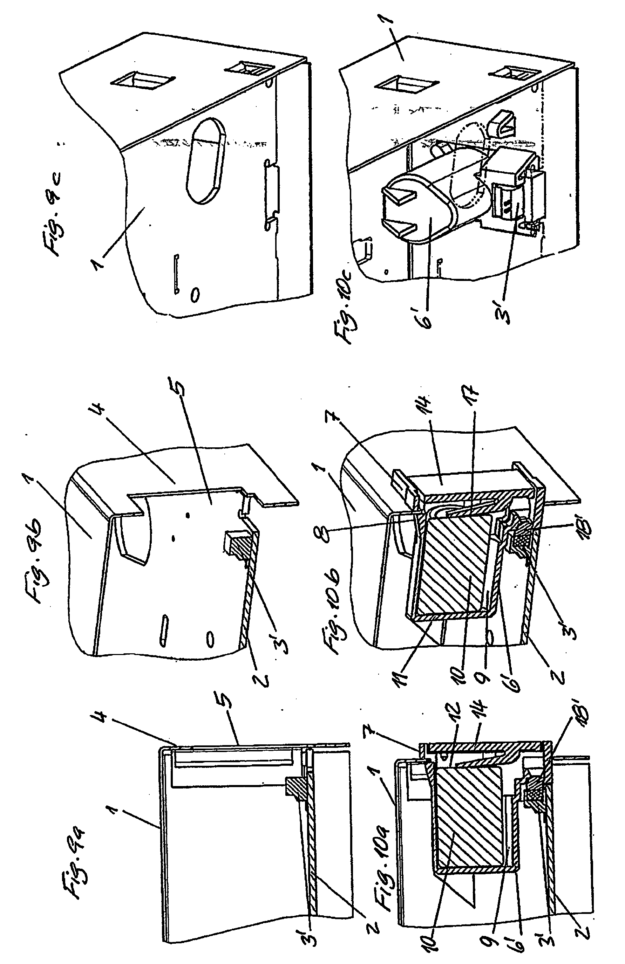

Bei dem nicht beauspruchten Ausführungsbeispiel der Figuren 6a bis 10c ist der Steckkontakt 18' ein Kontaktstift, der in eine sich parallel zur Leiterplatte 2 erstreckende Kontaktöffnung 19' der Batterieaufnahme 6' eingesetzt ist.

Die Batterieaufnahme 6' weist eine Haltenase 20'auf, die mit einem ersten Bereich 21' an der Stirnseite des in die Kontaktöffnung 19' ragenden Endes des Steckkontakts in Anlage ist.

Ein zweiter Bereich 22' der Haltenase 20' liegt radial mit Vorspannung an dem Steckkontakt 18 an und hält diesen somit kraftschlüssig in der Kontaktöffnung 19'.

Der Gegenkontakt 3' ist eine fest auf der Leiterplatte 2 angeordnete Kontaktbuchse.

Zur Montage wird zunächst die Leiterplatte 2 in das Gehäuse 1 eingesetzt und befestigt.

Anschließend wird die aus verschlossener Batterieaufnahme 6' mit eingesetzter Pufferbatterie 10 und Steckkontakt 18' vormontierte Baueinheit. in die Halteöffnung 5 des Gehäuses 1 eingesetzt.

Da sich dabei Steckkontakt 18' und Gegenkontakt 3' koaxial gegenüberliegen, wird auch der Kontaktstift des Steckkontakts 18' in die Kontaktbuchse des Gegensteckkontakts 3' eingeschoben.

Zu einem Austausch der Pufferbatterie 10 braucht nur der Verschlussdeckel 14 geöffnet und die Pufferbatterie 10 durch eine neue Pufferbatterie 10 ersetzt werden, ohne dass dabei die Kontaktierung tangiert wird.

## Patentansprüche

1. Fahrtschreibereinrichtung für ein Kraftfahrzeug mit einer, auf einer Leiterplatte (2) angeordneten Schaltung einer elektronischen Speicher- und Steuereinrichtung, die von einer Spannungsquelle des Kraftfahrzeugs sowie von einer Pufferbatterie (10) spannungsbeaufschlagt ist, mit einem Gehäuser (1), in dem die Leiterplatte und eine topfartige Batterieaufnahme (6, 6') fest angeordnet sind, wobei die Pufferbatterie durch eine Bestückungsöffnung (12) der Batterieaufnahme in die Batterieaufnahme austauschbar einsetzbar und mittels eines Steckkontakts (18, 18') mit einem Gegensteckkontakt (3, 3') der Leiterplatte elektrisch leitend verbindbar ist, **dadurch gekennzeichnet, dass** der Steckkontakt (18, 18') fest an der Batterieaufnahme (6, 6') angeordnet und mit dem ebenfalls fest auf der Leiterplatte (2) angeordneten Gegensteckkontakt (3, 3') steckverbindbar ist, dass der Steckkontakt (18, 18') ein Kontaktstift oder eine Kontaktbuchse und der Gegensteckkontakt (3, 3') eine Kontaktbuchse oder ein Kontaktstift ist, wobei der Steckkontakt (18, 18') form- und/oder kraftschlüssig in eine Kontaktöffnung (19, 19') der Batterieaufnahme (6, 6') eingesetzt ist, dass Batterieaufnahme (6, 6') und Steckkontakt (18, 18') eine vormontierte Baueinheit sind, ' wobei die vormontierte Baueinheit die in die Batterieaufnahme (6, 6') eingesetzte Pufferbatterie (10) aufweist und dass der Steckkontakt (18, 18') mit seinem dem Gegensteckkontakt (3, 3') abgewandten Ende an einer Abstützung (20) in Anlage ist, wobei die Bestückungsöffnung (12) der Batterieaufnahme (6, 6') durch einen Verschlussdeckel (14) verschließbar ist und die Abstützung an dem Verschlussdeckel (14) angeordnet und in der Schließposition des Verschlussdeckels (14) an dem Steckkontakt (18) in Anlage ist.

2. Fahrtschreibereinrichtung nach Anspruch 1, **dadurch gekennzeichnet, dass** die Batterieaufnahme (6, 6') in eine Halteöffnung (5) des Gehäuses (1) unlösbar eingesetzt ist.

3. Fahrtschreibereinrichtung nach Anspruch 2, **dadurch gekennzeichnet, dass** die Batterieaufnahme (6, 6') an ihrem Außenumfang mit Widerhaken (8) ausgebildet ist, die in der Einbaulage der Batterieaufnahme (6, 6') in der Halteöffnung (5) im Innenraum des Gehäuses (1) am umlaufenden Rand der Halteöffnung (5) in Anlage sind.

4. Fahrtschreibereinrichtung nach einem der vorhergehenden Ansprüche, **dadurch gekennzeichnet, dass** der Gegensteckkontakt (3) durch Positionierung der Leiterplatte (2) in ihre Einbaulage im Gehäuse (1) auf den Steckkontakt (18) der fest in ihrer Einbaulage im Gehäuse (1) angeordneten Batterieaufnahme (6) aufsteckbar ist.

5. Fahrtschreibereinrichtung nach einem der Ansprüche 1 bis 3, **dadurch gekennzeichnet, dass** der Steckkontakt (18') der Batterieaufnahme (6') durch Positionierung der Batterieaufnahme (6') in ihre Einbaulage im Gehäuse (1) auf den Gegensteckkontakt (3') der fest in ihrer Einbaulage im Gehäuse (1) befindlichen Leiterplatte aufsteckbar ist.

6. Fahrtschreibereinrichtung nach einem der vorhergehenden Ansprüche, **dadurch gekennzeichnet, dass** der Verschlussdeckel (14) in seinem einen Randbereich mittels eines Gelenks an der Batterieaufnahme (6, 6') angeordnet ist.

7. Fahrtschreibereinrichtung nach Anspruch 6, **dadurch gekennzeichnet, dass** Batterieaufnahme (6, 6') und Verschlussdeckel (14) einteilig als Kunststoffbauteil ausgebildet und mittels eines Filmscharniers (13) gelenkig miteinander verbunden sind.

8. Fahrtschreibereinrichtung nach einem der vorhergehenden Ansprüche, **dadurch gekennzeichnet , dass** der sich in Schließstellung befindliche Verschlussdeckel (14) mit der Batterieaufnahme (6, 6') verplombbar ist.

9. Fahrtschreibereinrichtung nach einem der vorhergehenden Ansprüche, **dadurch gekennzeichnet, dass** die Pufferbatterie (10) von einer an dem Verschlussdeckel (14) abgestützten Feder gegen den Boden (11) der Batterieaufnahme (6, 6') beaufschlagbar ist.

10. Fahrtschreibereinrichtung nach Anspruch 9, **dadurch gekennzeichnet, dass** die Feder einteilig mit dem Verschlussdeckel (14) ausgebildet ist.

11. Fahrtschreibereinrichtung nach einem der Ansprüche 5 bis 10, **dadurch gekennzeichnet, dass** die Batterieaufnahme (6) ein oder mehrere Positionieransätze (24) aufweist, die in entsprechende Positionierausnehmungen (23) in der Leiterplatte (2) ragen.

## Claims

1. Tachograph for a motor vehicle and having a circuit of an electronic storage and control device that is arranged on a circuit board (2), said circuit supplied with voltage by a voltage source of the motor vehicle and also by a backup battery (10), said tachograph having a housing (1) in which the circuit board and a pot-like battery receiving device (6, 6') are fixedly arranged, wherein the backup battery can be exchanged and inserted in the battery receiving device through a placement opening (12) of the battery receiving device and can be connected to a mating plug contact (3, 3') of the circuit board in an electrically conductive manner by means of a plug contact (18, 18'), **characterized in that** the plug contact (18, 18') is fixedly arranged on the battery receiving device (6, 6') and can be connected by way of a plug connection to the mating plug contact (3, 3') that is likewise fixedly arranged on the circuit board (2); that the plug contact (18, 18') is a contact pin or a contact socket and the mating plug contact (3, 3') is a contact socket or a contact pin, wherein the plug contact (18, 18') is inserted into a contact opening (19, 19') of the battery receiving device (6, 6') in a positive-locking and/or non-positive-locking manner; that the battery receiving device (6, 6') and the plug contact (18, 18') are a pre-assembled assembly wherein the pre-assembled assembly comprises the backup battery (10) that is inserted into the battery receiving device (6, 6') and that the plug contact (18, 18') is in contact with its end that is remote from the mating plug contact (3, 3') on a supporting arrangement (20), wherein the placement opening (12) of the battery receiving device (6, 6') can be closed by means of a closure lid (14) and the supporting arrangement is arranged on the closure lid (14) and is in contact with the plug contact (18) when the closure lid (14) is in its closed position.

2. Tachograph according to Claim 1, **characterized in that** the battery receiving device (6, 6') is inserted into a holding opening (5) of the housing (1) in such a manner that it cannot be detached.

3. Tachograph according to Claim 2, **characterized in that** the battery receiving device (6, 6') is embodied with barbed hooks (8) on its outer periphery, said barbed hooks being in contact with the peripheral edge of the holding opening (5) when the battery receiving device (6, 6') is in its installed position in the holding opening (5) in the interior space of the housing (1).

4. Tachograph according to any one of the preceding claims, **characterized in that** the mating plug contact (3) can be plugged onto the plug contact (18) of the battery receiving device (6) that is fixedly arranged in its installed position in the housing (1) by means of positioning the circuit board (2) in its installed position in the housing (1).

5. Tachograph according to any one of Claims 1 to 3, **characterized in that** the plug contact (18') of the battery receiving device (6') can be plugged onto the mating plug contact (3') of the circuit board that is located fixed in its installed position in the housing (1) by means of positioning the battery receiving device (6') in its installed position in the housing (1).

6. Tachograph according to any one of the preceding claims, **characterized in that** the closure lid (14) is arranged in its one end region by means of an articulated joint on the battery receiving device (6, 6').

7. Tachograph according to Claim 6, **characterized in that** the battery receiving device (6, 6') and closure lid (14) are embodied as one part as a synthetic material component and are connected to one another by means of a film hinge (13) in an articulated manner.

8. Tachograph according to any one of the preceding claims, **characterized in that** the closure lid (14) that is located in the closed position can be sealed with respect to the battery receiving device (6, 6') in a tamper-proof manner.

9. Tachograph according to any one of the preceding claims, **characterized in that** the backup battery (10) can be braced against the base (11) of the battery receiving device (6, 6') by a resilient element that is supported on the closure lid (14).

10. Tachograph according to Claim 9, **characterized in that** the resilient element is embodied as one part with the closure lid (14).

11. Tachograph according to any one of Claims 5 to 10, **characterized in that** the battery receiving device (6) comprises one or multiple positioning projections (24) that protrude into corresponding positioning recesses (23) in the circuit board (2).

## Revendications

1. Dispositif de tachygraphe pour un véhicule automobile, comprenant un circuit monté sur une plaquette (2) à circuit imprimé d'un dispositif électronique de mémorisation et de commande, qui est alimenté en tension par une source de tension du véhicule automobile ainsi que par une batterie (10) tampon, comprenant un boîtier (1) dans lequel la plaquette à circuit imprimé et un logement (6, 6') pour une batterie de type en pot sont montés de manière fixe, la batterie tampon pouvant être insérée, de manière à pouvoir être remplacée, dans le logement pour une batterie par une ouverture (12) d'équipement du logement pour une batterie et pouvant être reliée, d'une manière conductrice de l'électricité, à un contact (3, 3') antagoniste par enfichage de la plaquette à circuit imprimé au moyen d'un contact (18, 18') à enfichage, **caractérisé en ce que** le contact (18, 18') à enfichage est monté fixe sur le logement (6, 6') pour une batterie et peut être relié par enfichage également au contact (3, 3') antagoniste par enfichage disposé également de manière fixe sur la plaquette (2) à circuit imprimé, **en ce que** le contact (18, 18') par enfichage est une broche de contact ou une douille de contact et le contact (3, 3') antagoniste par enfichage est une douille de contact ou une broche de contact, le contact (18, 18') par enfichage étant inséré à complémentarité de forme et/ou à complémentarité de force dans une ouverture (19, 19') de contact du logement (6, 6') pour une batterie, **en ce que** le logement (6, 6') pour une batterie et le contact (18, 18') par enfichage sont une unité de construction montée à l'avance, l'unité de construction montée à l'avance ayant la batterie (10) tampon insérée dans le logement (6, 6') pour une batterie et **en ce que** le contact (18, 18') par enfichage s'appuie sur un appui (20) par son extrémité éloignée du contact (3, 3') antagoniste par enfichage, l'ouverture (12) d'équipement du logement (6, 6') pour une batterie pouvant être fermée par un couvercle (14) de fermeture et l'appui étant disposé sur le couvercle (14) de fermeture et étant, la position de fermeture du couvercle (14) de fermeture, en appui sur le contact (18) par enfichage.

2. Dispositif de tachygraphe suivant la revendication 1, **caractérisé en ce que** le logement (6, 6') pour une batterie est inséré de manière inamovible dans une ouverture (5) de maintien du boîtier (1).

3. Dispositif de tachygraphe suivant la revendication 2, **caractérisé en ce que** le logement (6, 6') pour une batterie est constitué en ayant sur son pourtour extérieur des barbes (8) qui, en la position de montage du logement (6, 6') pour une batterie, sont dans l'ouverture (5) de maintien à l'intérieur du boîtier (1), en appui sur le bord périphérique de l'ouverture (5) de maintien.

4. Dispositif de tachygraphe suivant l'une des revendications précédentes, **caractérisé en ce que** le contact (3) antagoniste par enfichage peut, par positionnement de la plaquette (2) à circuit imprimé dans sa position de montage dans le boîtier (1), s'enficher sur le contact (18) par enfichage du logement (6) pour une batterie disposée de manière fixe dans sa position de montage dans le boîtier (1).

5. Dispositif de tachygraphe suivant l'une des revendications 1 à 3, **caractérisé en ce que** le contact (18') par enfichage du logement (6') pour une batterie peut, par positionnement du logement (6') pour une batterie dans sa position de montage dans le boîtier (1), s'enficher sur le contact (3') antagoniste par enfichage sur la plaquette à circuit imprimé se trouvant fixe dans sa position de montage dans le boîtier (1).

6. Dispositif de tachygraphe suivant l'une des revendications précédentes, **caractérisé en ce que** l'une des parties de bord du couvercle (14) de fermeture est montée sur le logement (6, 6') pour une batterie au moyen d'une articulation.

7. Dispositif de tachygraphe suivant la revendication 6, **caractérisé en ce que** le logement (6, 6') pour une batterie et le couvercle (14) de fermeture sont constitués d'un seul tenant en une pièce en matière plastique et sont reliés l'un à l'autre d'une façon articulée au moyen d'une charnière (13) souple.

8. Dispositif de tachygraphe suivant l'une des revendications précédentes, **caractérisé en ce que** le couvercle (14) de fermeture, se trouvant en la position de fermeture, peut être plombé avec le logement (6, 6') pour une batterie.

9. Dispositif de tachygraphe suivant l'une des revendications précédentes, **caractérisé en ce que** la batterie (10) tampon peut, par un ressort s'appuyant sur le couvercle (14) de fermeture, s'appliquer sur le fond (11) du logement (6, 6') pour une batterie.

10. Dispositif de tachygraphe suivant la revendication 9, **caractérisé en ce que** le ressort est constitué d'un seul tenant avec le couvercle (14) de fermeture.

11. Dispositif de tachygraphe suivant l'une des revendications 5 à 10, **caractérisé en ce que** le logement (6) pour la batterie a un ou plusieurs tenons (24) de mise en position, qui pénètrent dans des évidements (23) correspondants de mise en position de la plaquette (2) à circuit imprimé.
